# EUROPÄISCHE PATENTSCHRIFT

(11) **EP 0 644 707 B1**
(45) Veröffentlichungstag und Bekanntmachung des Hinweises auf die Patenterteilung: **11.12.1996**
(21) Anmeldenummer: 94114531.0
(22) Anmeldetag: 15.09.1994
(51) Int. Cl.: H05B 3/74

(54) **Strahlungsheizkörper, insbesondere zum Beheizen einer glaskeramischen Kochplatte**
Radiant heater, in particular for a vitroceramic hob
Elément de chauffage par radiation, en particulier pour une plaque vitrocéramique

(30) Priorität: 17.09.1993 DE 4331702
(43) Veröffentlichungstag der Anmeldung: 22.03.1995
(73) Patentinhaber: Wacker-Chemie GmbH, D-81737 München (DE)
(72) Erfinder: Kratel, Günter, Dr., D-87471 Durach (DE); Eyhorn, Thomas, D-87452 Altusried (DE); Stohr, Günther, Dr., D-87471 Durach (DE); Rell, Andreas, D-87448 Waltenhofen (DE)

(56) Entgegenhaltungen:
- EP-A- 0 095 118
- EP-A- 0 189 108
- EP-A- 0 204 185
- EP-A- 0 211 682
- WO-A-91/06193
- DE-C- 2 858 342

## Beschreibung

Strahlungsheizkörper, insbesondere zum Beheizen einer glaskeramischen Kochplatte, mit einer einen elektrischen Heizleiter tragenden Fläche, wobei diese Fläche die Oberfläche eines Isolationskörpers ist, der aus einer Lagerschicht und/oder einer wärmeisolierenden mikroporösen Dämmschicht besteht, und mit einer schalenförmigen Einfassung, die den Isolationskörper ringförmig umschließt und geht aus von EP-A-0 204 185.

Aus der Patentschrift DE-30 20 326 C2 ist ein Strahlungsheizkörper für eine Glaskeramik-Kochplatte bekannt, bei dem sich zwischen der elektrischen Heizwendel und dem Boden einer Aufnahmeschale aus Metall ein einstückiges Wärmedämmaterial befindet, das bodenseitig aus einer mikroporösen Dämmschicht und in Richtung zur Heizwendel aus einer mikroporösen gehärteten Lagerschicht besteht. Die Heizwendel ist auf der Oberseite der Lagerschicht aufgeklebt. Darüber hinaus weist die Lagerschicht einen zusätzlich verdichteten Umfangsrand auf, der über die Ebene der Heizwendel hinausragt und als Auflage für die Glaskeramik-Kochplatte fungiert. Zur Verstärkung enthält die Lagerschicht gegenüber der Dämmschicht außer einem Härter auch einen erhöhten Anteil an Silikatfaser.

In der Patentschrift DE-28 58 342 C2 ist ein Strahlungsheizer für Kochplatten beschrieben, bei dem die elektrische Heizwendel mit Klammern in eine isolierende Platte geheftet wird, die keramische Verstärkungsfasern enthält. Die Klammern werden durch Reibung in der isolierenden Platte gehalten. Die Platte ist in einer Schutzpfanne aus Metall gelagert. Ferner ist ein Ring aus Verstärkungsfasern vorgesehen, der am Rand der isolierenden Platte aufliegt und über die Oberkante der Schutzpfanne hinausragt, so daß im Betriebszustand die Oberfläche des Rings die glaskeramische Kochplatte abstützt.
Die int. Patentanmeldung WO-91/06193 offenbart eine Strahlungsheizungseinheit mit einem keramischen Heizelementträger, der vorzugsweise 10-20 % der Fläche einer darunter angeordneten Wärmeisolation bedeckt. Die Wärmeisolation besteht aus einem mikroporösen Wärmedämmstoff mit einem Fasergehalt von 0-50 Gew.%.
Gegenstand der EP-204 185 A1 ist eine Strahlungs-Heiz-Einheit, insbesondere zur Beheizung einer Platte, wie einer Glaskeramik-Kochplatte, mit einem Isolierträger aus hochtemperaturbeständigem Preßwerkstoff, an dem mindestens ein Strahlungs-Heizwiderstand befestigt ist und der dadurch gekennzeichnet ist, daß der Isolierträger im wesentlichen aus einer Körnung aus mit einem Bindemittel verpreßten Blähglimmer, wie Vermiculit, besteht.

Es ist allgemein bekannt und aus den zitierten Patentschriften erkennbar, daß die mechanisch beanspruchten Komponenten eines Strahlungsheizkörpers, vor allem die zur Lagerung für den elektrischen Heizleiter vorgesehene Schicht und die Abstützung der Kochplatte, aus einem festen Material bestehen müssen, das den mechanischen Belastungen beim Zusammen- und Einbau des Strahlungsheizkörpers und während seines Betriebs standhält. Nachteilig ist, daß die wärmeisolierende Wirkung einiger der bisher verwendeten, mechanisch belastbaren Materialien entweder wegen deren hohen Dichte nicht zufriedenstellend ist, oder mikroporöses Isoliermaterial verwendet werden muß, das mit Fasern verstärkt ist. Da neben den kanzerogenen Asbestfasern auch andere mineralische Fasern zumindest in den Verdacht geraten sind, krebsauslösend wirken zu können, verstärkt sich der Druck der öffentlichkeit, faserhaltige Materialien durch faserfreie Analoga zu substituieren. Auch in der Industrie sucht man zunehmend nach faserfreien Substituten, nicht zuletzt deshalb, um einer eventuellen Rücknahmeverpflichtung für faserhaltiges Material nach dessen Gebrauch zu entgehen.

Ein weiterer Nachteil ergibt sich daraus, daß die elektrischen Heizleiter gelegentlich auch mit Hilfe metallischer Klammern fixiert werden, die in das wärmeisolierende Dämmaterial getrieben werden, und es unter Umständen zu Kurzschlüssen kommen kann, wenn eine Klammer versehentlich die metallische Wand der schalenförmigen Einfassung berührt, die das wärmeisolierende Dämmaterial umschließt. Zu ähnlichen Problemen mit der elektrischen Sicherheit kann es kommen, wenn der metallische Heizleiter teilweise in die Dämmschicht gedrückt wird, um ihn darin zu verankern. Darüber hinaus sind bei einer aus Metall ausgeführten Einfassung Wärmeverluste durch die unzureichende Wärmeisolierung des Metalls hinzunehmen.

Es bestand daher die Aufgabe, einen faserfreien Strahlungsheizkörper bereitzustellen, der sich durch eine besonders gute Wärmeisolierung auszeichnet, einfach und kostengünstig herzustellen ist, und dessen mechanisch beanspruchte Teile sich durch eine hohe Festigkeit auszeichnen.

Gelöst wird die Aufgabe durch einen Strahlungsheizkörper, gemäß dem kennzeichnenden Teil des Anspruchs 1.

Grundsätzlich kann sowohl die bisher aus Metall gefertigte schalenförmige Einfassung des Strahlungsheizkörpers, als auch die zum Teil eingesetzte, aus gehärtetem, faserhaltigem oder keramischem Material bestehende Lagerschicht, die den elektrischen Heizleiter trägt, durch einen entsprechend geformten Körper aus dem hochporösen anorganischen Material ersetzt werden. Ebenso ist es möglich, daß zur wärmeisolierenden mikroporösen Dämmschicht bei der Herstellung ein Teil des hochporösen Materials zugemischt wird, wodurch die mechanische Belastbarkeit der Dämmschicht gesteigert wird. Wenn eine derartig verfestigte Dämmschicht verwendet wird, ist es zweckmäßig, auf ihrer Oberfläche auch den elektrischen Heizleiter zu lagern und auf eine Lagerschicht zu verzichten. Prinzipiell ist es auch möglich, den in Patentschrift DE-28 58 342 C2 beschriebenen Faserring zur Abstützen der Kochplatte durch einen entsprechenden Ring aus dem hochporösen anorganischen Material zu ersetzen.

Da der Einsatz des hochporösen anorganischen Materials nur für entweder die schalenförmige Einfassung oder die Lagerschicht oder die wärmeisolierende Dämmschicht zwingend vorgeschrieben ist, ergibt sich eine Reihe von Kombinationsmöglichkeiten, von denen die folgenden bevorzugt werden:
a) ein Strahlungsheizkörper mit einer wärmeisolierenden mikroporösen, vorsugsweise faserfreien Dämmschicht und einer Lagerschicht aus dem hochporösen anorganischen Material. Die schalenförmige Einfassung besteht besonders bevorzugt ebenfalls aus dem hochporösen anorganischen Material, obwohl in diesem Fall auch eine Einfassung aus Metall nicht abzulehnen ist.
b) ein Strahlungsheizkörper mit einer wärmeisolierenden mikroporösen, vorzugsweise faserfreien Dämmschicht, die durch Zumischen des hochporösen anorganischen Materials bei der Herstellung verstärkt ist und auf deren Oberfläche der elektrische Heizleiter gelagert wird. Die schalenförmige Einfassung besteht in diesem Fall vorzugsweise aus dem hochporösen anorganischen Material.

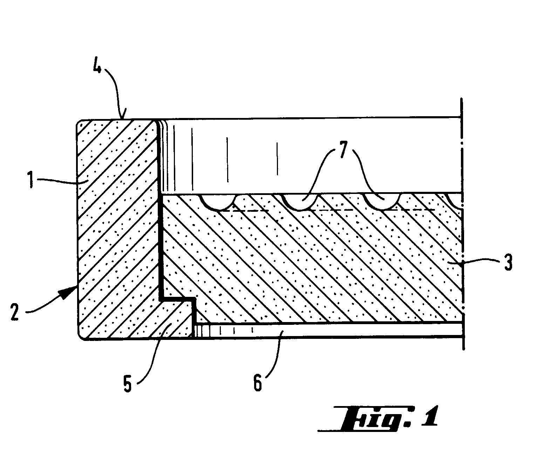

Zur besseren Veranschaulichung von Formmerkmalen ist in der Figur eine Hälfte eines spiegelsymmetrischen Querschnitts durch die schalenförmige Einfassung eines erfindungsgemäßen Strahlungsheizkörpers gezeigt, wobei die Einfassung aus hochporösem anorganischen Material besteht und der Isolationskörper, den die Einfassung umschließt, beispielhaft nur von der mikroporösen Dämmschicht gebildet wird.

Wenn eine schalenförmige Einfassung aus dem hochporösen anorganischen Material verwendet wird, ist es zweckmäßig die Form der Einfassung so zu wählen, daß die Seitenwand 1 der Einfassung 2, die im Betriebszustand den Isolationskörper 3 umschließt, über die höchste Erhebung des Heizleiters hinausragt, vorzugsweise um 1 bis 20 mm. Auf der Oberfläche 4 der Seitenwand kann dann im Betriebszustand eine glaskeramische Kochplatte aufliegen. Prinzipiell kann eine derartige schalenförmige Einfassung auch aus zwei oder mehreren Formteilen zusammensetzbar ausgestaltet sein. Ein weiteres Merkmal der schalenförmigen Einfassung betrifft deren Boden 5. Im Boden 5 der schalenförmigen Einfassung ist eine kreisförmige Öffnung 6 belassen, so daß der Boden in der Draufsicht einer Kreisscheibe gleicht. Der Isolationskörper ist so geformt, daß er formschlüssig die Öffnung im Boden ausfüllt.

Das eingesetzte anorganische Material ist hochporös und weist einen hohen Anteil an Siliciumdioxid auf. Besonders geeignet sind Vertreter der Gruppen der geblähten Schichtsilikate (z.B. Vermiculit, Glimmer), der hochporösen Vulkangesteine (z.B. Perlit, Bims), der verkieselten Fossilerden (z.B. Diatomeenerde, Kieselgur) und der Pflanzenaschen (z.B. Reisasche, Maisasche). Bevorzugt verwendete Vertreter dieser Gruppen sind Perlit und Kieselgur. Besonders bevorzugt wird geblähter Vermiculit eingesetzt. Das hochporöse anorganische Material kann Vertreter aus diesen Gruppen in beliebigen Mischungsverhältnissen enthalten. Bei Vermiculit ist jedoch bevorzugt, dieses Material ohne weitere Beimischung eines Vertreters aus den genannten Gruppen zu verwenden. Zur Herstellung von Formkörpern wie der schalenförmigen Einfassung oder der Lagerschicht wird dem hochporösen anorganischen Material ein aushärtendes Bindemittel zugemischt. Diese Mischungen haben folgende Zusammensetzungen:
60-99,9 Gew.-%, besonders bevorzugt 70-90 Gew.-% hochporöses anorganisches Material
0,1-40 Gew.-%, besonders bevorzugt 10-30 Gew.-% aushärtendes Bindemittel

Die wärmeisolierende mikroporöse Dämmschicht weist in der bevorzugten, faserfreien Ausbildung folgende Zusammensetzung auf:
30-100 Gew.-%, besonders bevorzugt 50-89 Gew.-% feinteiliges Metalloxid
0-50 Gew.-%, besonders bevorzugt 20-40 Gew.-%Trübungsmittel
0-15 Gew.-%, besonders bevorzugt 0,5-2 Gew.-% anorganisches Bindemittel

Die mikroporöse Dämmschicht kann jedoch auch faserhaltig ausgebildet sein, zumal wenn Fasern verwendet werden, die gesundheitlich unbedenklich sind oder die nicht lungengängig sind. Die bevorzugte Zusammensetzung der faserhaltigen mikroporösen Dämmschicht ist:
30-100 Gew.-%, besonders bevorzugt 50-89 Gew.-% feinteiliges Metalloxid
0-50 Gew.-%, besonders bevorzugt 20-49 Gew.-% Trübungsmittel
0,1-50 Gew.-%, besonders bevorzugt 5-20 Gew.-% Fasermaterial
0-15 Gew.-%, besonders bevorzugt 0,5-2 Gew.-% anorganisches Bindemittel

Wird auf eine Lagerschicht verzichtet und der elektrische Heizleiter auf der wärmeisolierenden Dämmschicht aus einer faserfreien Mischung von hochporösem anorganischen und mikroporösem Material gelagert, so hat die Mischung, aus der die Dämmschicht hergestellt wird, folgende Zusammenstzung:
20-90 Gew.-%, besonders bevorzugt 25-50 Gew.-% feinteiliges Metalloxid
10-80 Gew.-%, besonders bevorzugt 50-75 Gew.-% hochporöses anorganisches Material
0-50 Gew.-%, besonders bevorzugt 20-40 Gew.-% Trübungsmittel
0-30 Gew.-%, besonders bevorzugt 3-20 Gew.-% aushärtendes Bindemittel
0-15 Gew.-%, besonders bevorzugt 0,5-2 Gew.-% anorganisches Bindemittel
Die eingesetzten feinteiligen Metalloxide weisen spezifische Oberflächen nach BET von vorzugsweise 50-700 m²/g, insbesondere 70-400 m²/g auf. Bevorzugt werden pyrogen erzeugte Kieselsäuren, einschließlich Lichtbogenkieselsäuren, alkaliarme Fällungskieselsäuren, Siliciumdioxidaerogele und Aluminiumoxide sowie Mischungen der genannten Stoffe verwendet. Besonders bevorzugt sind pyrogen erzeugte Kieselsäure oder Aluminiumoxid oder deren Mischungen.

Es ist von Vorteil, wenn das eingesetzte Trübungsmittel ein Absorptionsmaximum im Infrarotbereich zwischen 1,5 und 10 µm aufweist. Beispiele für geeignete Trübungsmittel sind Ilmenit, Titandioxid, Siliciumcarbid, Eisen(II)Eisen(III)-Mischoxide, Chromdioxid, Zirkonoxid, Mangandioxid, Eisenoxid, Siliciumdioxid, Aluminiumoxid und Zirkonsilikat, sowie deren Mischungen. Besonders bevorzugt kommen Ilmenit und Zirkonsilikat zur Anwendung.

Die anorganischen Bindemittel, die dem mikroporösen Dämmaterial zugeschlagen werden, sind bekannt. Dazu gehören beispielsweise die in der Patentschrift US-4,985,163 genannten Bindemittel. Als bevorzugt eingesetzte anorganische Bindemittel kommen Boride des Aluminiums, des Titans, des Calciums, Silicide wie Calciumsilicid oder Calcium-Aluminiumsilicid, Borcarbid, Oxide wie Magnesiumoxid, Calciumoxid, Bariumoxid oder Mischungen der genannten Stoffe in Frage.

Zu den aushärtenden Bindemitteln, die mit dem hochporösen anorganischen Material vermischt werden, gehören wässerige Lösungen von Phosphaten wie Monoaluminiumphosphat, Silikophosphaten sowie Alkaliwassergläser und Kieselsol. Auch Mischungen der genannten Stoffe können als aushärtendes Bindemittel verwendet werden. Bevorzugt sind Natriumwasserglas, Monoaluminiumphosphat, Silikophosphate und deren Mischungen.

Für den Fall, daß in der wärmeisolierenden Dämmschicht Fasermaterial vorgesehen ist, können Glaswolle, Quarzglasfasern, Steinwolle, Basaltwolle, Schlackenwolle, keramische Fasern, Fasern aus Aluminiumoxid oder Siliciumdioxid, oder Mischungen der genannten Fasern eingesetzt werden. Bevorzugt werden aus einer Schmelze gewonnene Fasern aus Aluminiumoxid und/oder Siliciumdioxid. Der Faserdurchmesser beträgt vorteilhaft 0,1-12 µm und die Faserlänge beträgt 1-25 mm.

Die Herstellung der mikroporösen Dämmschicht, auch wenn sie anteilig hochporöses anorganisches Material enthält, umfaßt vorzugsweise folgende Verfahrensschritte:
a) Vorverdichten der das feinteilige Metalloxid enthaltenden Mischung bei Drücken von 1-5 bar;
b) Verpressen des vorverdichteten Materials in die gewünschte Form bei Enddrücken von 8-20 bar;
c) Gegebenenfalls Erhitzen der mikroporösen Dämmschicht auf Temperaturen von 100-900 °C.
Zur Herstellung einer schalenförmigen Einfassung oder einer Lagerschicht aus einer Mischung, die das hochporöse anorganische Material enthält, wird diese Mischung in die gewünschte Form gepreßt und auf eine Dichte von 200-700 kg/m³, vorzugsweise 250-500 kg/m³ verdichtet. Zum Aushärten genügt eine anschließende Temperaturbehandlung an Luft im Bereich von 20-250 °C.

Bevorzugt ist, die wärmeisolierende Dämmschicht aus mikroporösem Material in die fertiggestellte schalenförmige Einfassung zu legen oder zu kleben. Als Klebstoffe können die genannten aushärtenden Bindemittel verwendet werden. Ist weiterhin eine Lagerschicht aus dem hochporösen Material vorgesehen, wird diese flächig auf die Oberfläche der mikroporösen Dämmschicht gelegt oder geklebt. Im ersten Fall bildet die mikroporöse Dämmschicht alleine, im zweiten Fall zusammen mit der Lagerschicht den Isolationskörper, der von der schalenförmigen Einfassung umschlossen wird. Die dem Boden der Einfassung gegenüberliegende Oberfläche des Isolationskörpers trägt den elektrischen Heizleiter des Strahlungsheizkörpers.

Auf der dem Boden der Einfassung abgewandten Oberfläche des Isolationskörpers - je nach Wahl der Ausgestaltungsform des Strahlungsheizkörpers auf der dem Boden abgewandten Oberfläche der mikroporösen Dämmschicht oder der dem Boden abgewandten Oberfläche der hochporösen Lagerschicht - wird der elektrische Heizleiter gelagert. Die Oberfläche des Isolationskörpers muß nicht vollständig eben sein. Gegebenenfalls kann es zweckmäßig sein, Vertiefungen, beispielsweise in Form von während der Herstellung eingepreßten Ringnuten 7, vorzusehen, in denen die Heizleiter abgestützt werden. Die Befestigung der Heizleiter erfolgt durch Kleben auf die Oberfläche des Isolationskörpers, beispielsweise mit einem anorganischen Kleber auf Phosphat- oder Silikatbasis und/oder durch Eindrücken von den Heizleiter umfassenden Klammern in die Oberfläche des Isolationskörpers, wobei die Klammern auch in die mikroporöse Dämmschicht eindringen können und/oder durch direktes Einpressen von Teilen des Heizleiters in die Oberfläche des Isolationskörpers. Gegebenenfalls kann der Heizleiter bereits in der Lagerschicht verankert werden, während diese, wie obenstehend beschrieben, zusammen mit der mikroporösen Dämmschicht in die schalenförmige Einfassung gepreßt wird.

In dieser Beschreibung wird der Begriff elektrischer Heizleiter so verwendet, daß er sowohl Heizspiralen, Heizdrähte, Heizbänder als auch Halogenlampen und Kombinationen derartiger Heizelemente einschließt.

Die erfindungsgemäßen Strahlungsheizkörper werden vorzugsweise zum Beheizen von glaskeramischen Kochplatten verwendet. Ihre Verwendung zum Beheizen von Öfen, insbesondere Backöfen, Grillgeräten und in Heiz- oder Halogenstrahlern ist jedoch ebenso möglich.

Wird die schalenförmige Einfassung aus dem hochporösen anorganischen Material gefertigt, kann auf einen sonst üblichen, die Kochplatte federnd abstützenden Faserring verzichtet werden. Die Einfassung ist elektrisch isolierend, besitzt nicht die wärmeleitenden Eigenschaften von Metall und ist kostengünstiger herstellbar als die bisher verwendeten metallischen Einfassungen. Die Einfassungen aus Metall können in bereits bestehenden Fertigungslinien ohne besonderen Aufwand durch die Einfassungen aus dem hochporösen Material ersetzt werden.

Wird der Isolationskörper aus dem hochporösen anorganischen Material gefertigt, kann ein vollkommen faserfreier Strahlungsheizkörper bereitgestellt werden. Die mechanische Verbindung zwischen dem Isolationskörper und dem von ihm getragenen elektrischen Heizleiter bleibt auch während des Betriebs der Strahlungsheizung stabil, da das hochporöse anorganische Material die vornehmlich durch Wärmeausdehnung des Heizleiters auf den Isolationskörper einwirkenden Kräfte elastisch aufnehmen kann.

Nachfolgend ist ein Ausführungsbeispiel des erfindungsgemäßen Strahlungsheizkörpers beschrieben:

### Beispiel:

Eine homogene Mischung bestehend aus 50 Gew.-% Perlit mit einem Teilchendurchmesser von 0,1-5 mm, 35 Gew.-% Reisasche und 15 Gew.-% von Monoaluminiumphosphat (40 %ige, wässerige Lösung) wurde bei axialer Druckaufgabe zu einer schalenförmigen Einfassung gepreßt, wobei der Boden der Einfassung eine kreisförmige Öffnung aufwies. In diese Einfassung wurde eine vorgefertigte mikroporöse Dämmschicht einer Mischung von 65,0 Gew.-% pyrogen erzeugter Kieselsäure und 34,2 Gew.-% Zirkonsilikat eingelegt. Anschließend wurde eine vorgefertigte Lagerschicht mit der Zusammensetzung 62,5 Gew.-% pyrogen erzeugte Kieselsäure, 31,7 Gew.-% Zirkonsilikat, 5 Gew.-% Aluminiumsilikatfaser und 0,8 Gew.-% Borcarbid auf die freie Oberfläche der mikropörösen Dämmschicht mit Hilfe eines Silikophosphatklebers aufgeklebt.

## Patentansprüche

1. Strahlungsheizkörper, insbesondere in einer Strahlungsheizung zum Beheizen einer glaskeramischen Kochplatte, mit einer einen elektrischen Heizleiter tragenden Fläche, wobei diese Fläche die Oberfläche eines Isolationskörper (3) ist, der aus einer Lagerschicht und/oder einer wärmeisolierenden mikroporösen Dämmschicht besteht, und mit einer schalenförmigen Einfassung (2), die den Isolationskörper (3) ringförmig umschließt, dadurch gekennzeichnet, daß die Lagerschicht und/oder die Einfassung und/oder die mikroporöse Dämmschicht ein hochporöses, faserfreies anorganisches Material enthält und der Boden der Einfassung (2) eine kreisförmige Öffnung (6) aufweist, die der Isolationskörper (3) ausfüllt.

2. Strahlungsheizkörper nach Anspruch 1, dadurch gekennzeichnet, daß
das anorganische Material ein Vertreter oder ein Gemisch von Vertretern aus den Gruppen der geblähten Schichtsilikate, der hochporösen Vulkangesteine, der verkieselten Fossilerden und der Pflanzenaschen ist.

3. Strahlungsheizkörper nach Anspruch 1 oder Anspruch 2, dadurch gekennzeichnet, daß
das anorganische Material Vermiculit ist.

4. Strahlungsheizkörper nach einem der Ansprüche 1 bis 3, dadurch gekennzeichnet, daß
die mikroporöse Dämmschicht faserfrei ist.

5. Strahlungsheizkörper nach einem der Ansprüche 1 bis 4, dadurch gekennzeichnet, daß
der elektrische Heizleiter auf die Oberfläche des Isolationskörpers geklebt, geklammert oder in diese Oberfläche teilweise hineigedrückt wird.

6. Verwendung des Strahlungsheizkörpers nach einem der Ansprüche 1 bis 5 zum Beheizen einer glaskeramischen Kochplatte, zum Beheizen von Backöfen, Grillgeräten und in Heiz- und Halogenstrahlern.

## Claims

1. Radiator, in particular in a radiative heater for heating a glass-ceramic hotplate, having an area bearing an electrical heating element, with this area being the surface of an insulator (3) which comprises a mounting layer and/or a thermally insulating microporous insulation layer, and having a dish-shaped enclosure (2) which forme an annular surround around the insulator (3), characterized in that the mounting layer and/or the enclosure and/or the microporous insulation layer comprises a highly porous, fibre-free inorganic material and the bottom of the enclosure (2) has a circular opening (6) which is filled by the insulator (3).

2. Radiator according to Claim 1, characterized in that the inorganic material is a representative or a mixture of representatives selected from the groups consisting of the expanded sheet silicates, the highly porous volcanic rocks, the silicified fossil earths and the plant ashes.

3. Radiator according to Claim 1 or Claim 2, characterized in that the inorganic material is vermiculite.

4. Radiator according to any of Claims 1 to 3, characterised in that the microporous insulation layer is fibre-free.

5. Radiator according to any of Claims 1 to 4, characterized in that the electrical heating element is adhesively bonded to, stapled to or partly pressed into the surface of the insulator.

6. Use of the radiator according to any of Claims 1 to 5 for heating a glass-ceramic hotplate, for heating baking ovens, grills and in heating or halogen radiators.

## Revendications

1. Corps chauffant par rayonnement, en particulier dans un chauffage par rayonnement pour le chauffage d'une plaque de cuisson vitrocéramique, comportant une face soutenant un conducteur de la chaleur électrique, cette face étant la surface d'un corps d'isolation (3), qui est constitué d'une couche support et/ou d'une couche isolante microporeuse calorifuge, et comportant une enceinte en forme de cuvette (2) qui entoure annulairement le corps d'isolation (3), caractérisé en ce que la couche support et/ou l'enceinte et/ou la couche isolante microporeuse contiennent une matière inorganique sans fibres hautement poreuse et que le fond de l'enceinte (2) présente une ouverture circulaire (6), que remplit le corps d'isolation (3).

2. Corps chauffant par rayonnement selon la revendication 1, caractérisé en ce que la matière inorganique est un représentant ou un mélange de représentants des groupes des minéraux argileux expansés, des roches volcaniques hautement poreuses, des terres fossiles silicifiées et des cendres de plantes.

3. Corps chauffant par rayonnement suivant la revendication 1 ou 2, caractérisé en ce que la matière inorganique est de la vermiculite.

4. Corps chauffant par rayonnement suivant l'une des revendications 1 à 3, caractérisé en ce que la couche isolante microporeuse est exempte de fibres.

5. Corps chauffant par rayonnement suivant l'une des revendications 1 à 4, caractérisé en ce que le conducteur de la chaleur électrique est collé, agrafé sur la surface du corps d'isolation, ou partiellement enfoncé dans cette surface.

6. Utilisation du corps chauffant par rayonnement suivant l'une des revendications 1 à 5 pour le chauffage d'une plaque de cuisson vitrocéramique, pour le chauffage de fours de cuisson, d'appareils de grillage et dans des projecteurs chauffants ou halogènes.
